# EUROPÄISCHE PATENTSCHRIFT

(11) **EP 3 090 970 B1**
(45) Veröffentlichungstag und Bekanntmachung des Hinweises auf die Patenterteilung: **30.08.2017**
(21) Anmeldenummer: 16165041.1
(22) Anmeldetag: 13.04.2016
(51) Int. Cl.: B65G 47/57, B65G 47/82

(54) **VORRICHTUNG UND VERFAHREN ZUM UMGANG MIT ARTIKELN**
DEVICE AND METHOD FOR HANDLING ITEMS
DISPOSITIF ET PROCEDE DE MANUTENTION D'ARTICLES

(30) Priorität: 04.05.2015 DE 102015106918
(43) Veröffentlichungstag der Anmeldung: 09.11.2016
(73) Patentinhaber: Krones Aktiengesellschaft, 93073 Neutraubling (DE)
(72) Erfinder: FRITSCH, Dennis, 93073 Neutraubling (DE); BEER, Erhard, 93073 Neutraubling (DE); HAAS, Johann, 93073 Neutraubling (DE); OSTERHAMMER, Martin, 93073 Neutraubling (DE)
(74) Vertreter: Benninger, Johannes

(56) Entgegenhaltungen:
- EP-A1- 2 825 488
- DE-A1- 4 314 600
- FR-A1- 2 436 727
- JP-A- 2000 118 696
- US-A- 4 214 848

## Beschreibung

Die vorliegende Erfindung betrifft eine Vorrichtung zum Umgang mit Artikeln, gemäß dem Oberbegriff des Anspruchs 1 und ein beispielsweise zum Betrieb einer solchen Vorrichtung geeignetes Verfahren zum Umgang mit Artikeln gemäß dem Oberbegriff des Anspruchs 15. Insbesondere betrifft die Erfindung eine Vorrichtung und ein Verfahren zum Umgang mit Artikeln, welcher Umgang eine Übergabe von Artikeln zwischen in vertikaler Richtung relativbeweglichen Einrichtungen vorsieht.

Ein wesentlicher Kostenfaktor in der Verpackungstechnik und in der Verpackungsindustrie, bei der beispielsweise mit zu gruppierenden und/oder gruppierten und/oder aufgestapelten Artikeln umgegangen wird, ist die Taktung, mit der innerhalb möglichst kurzer Zeit mit möglichst vielen Artikeln umgegangen werden kann. Je kürzer die Taktung, desto höher ist dabei der Artikelumsatz und um so höher und damit besser ist die Auslastung der hierfür vorgesehenen Maschinen, Anlagen und Einrichtungen.

Die Taktung kann dabei als der Quotient der Anzahl von Artikeln oder Artikellagen zur Zeit, innerhalb der mit dieser Anzahl von Artikeln oder Artikellagen umgegangen wird, beschrieben werden.

Bei den Artikeln kann es sich beispielsweise um Objekte, wie etwa verpackte oder unverpackte Gegenstände, Behälter, Kartonagen, oder um Gebinde aus mehreren Objekten handeln, wobei die Objekte eines Gebindes beispielsweise vermittels einer Umreifung, einer Umverpackung, wie etwa einer Umwickelung, einem Schrumpfschlauch oder eines Kartons oder eines Tragegestells zusammengehalten werden, um nur einige denkbare Ausgestaltungen zu nennen.

Der Umgang mit Artikeln kann vorsehen, Artikel von einem Ausgangsniveau auf ein höher oder tiefer liegendes Endniveau zu verbringen, beispielsweise um diese einzeln oder zu mehreren gleichzeitig beispielsweise zu Artikellagen gruppiert an einem Stapelplatz zu einem Stapel aufzustapeln, in welchem Stapel die Artikel oder Artikellagen dann Stapellagen bilden.

Hierzu ist es erforderlich, Artikel zwischen in vertikaler Richtung relativbeweglichen, jeweils auch als eine Station bezeichneten Einrichtungen zu übergeben. Die Einrichtungen sind dabei in einer horizontalen Förderrichtung der Artikel gesehen nach- und/oder hintereinander angeordnet, so dass Artikel während ihres Transports in Förderrichtung von einem Ausgangsort zu einem Endort zwischen in vertikaler Richtung relativbeweglichen Einrichtungen übergeben werden, von zumindest einer dieser Einrichtungen die Artikel zwischen der Übergabe an diese Einrichtung und der Weitergabe beispielsweise an eine nachfolgende Einrichtung angehoben und/oder abgesenkt werden, um wenigstens einen Teil einer Höhendifferenz zwischen dem Ausgangsniveau und dem Endniveau zu überbrücken.

Dabei findet die Übergabe von Artikeln zwischen in vertikaler Richtung relativbeweglichen Einrichtungen beispielsweise von einer ersten Einrichtung an eine zweite, gegenüber der ersten Einrichtung in vertikaler Richtung relativbewegliche Einrichtung und/oder von einer ersten, gegenüber einer zweiten Einrichtung in vertikaler Richtung relativbeweglichen Einrichtung an die zweite Einrichtung und/oder von einer ersten, gegenüber einer zweiten Einrichtung in vertikaler Richtung relativbeweglichen Einrichtung an die zweite, gegenüber der ersten Einrichtung in vertikaler Richtung ebenfalls relativbewegliche Einrichtung statt.

Jeder Einrichtung ist hierbei eine zumindest vertikal bewegliche Auflagefläche oder Auflageebene zugeordnet, welche zum aufnehmen eines oder mehrerer Artikel, beispielsweise einer Artikellage geeignet ist. Zumindest der- oder denjenigen Einrichtungen, denen in horizontaler Förderrichtung eine weitere Einrichtung nachgeordnet ist, ist zudem jeweils eine Übergabevorrichtung zugeordnet.

Jede Übergabevorrichtung einer Einrichtung schiebt die auf der Auflagefläche der jeweiligen Einrichtung befindlichen Artikel in horizontaler Förderrichtung über auf die Auflagefläche der der jeweiligen Einrichtung nachgeordneten Einrichtung.

Zunächst werden einzelne oder beispielsweise zu Artikellagen gruppierte Artikel von der Überführungsvorrichtung einer Einrichtung, beispielsweise einer Gruppierstation oder eine einer Gruppierstation in horizontaler Förderrichtung nachgeordnete Bereitstellungsstation, welche die Artikel auf einer als Bereitstellungsfläche gebildete Auflagefläche auf dem Ausgangsniveau bereitstellt, an eine in horizontaler Förderrichtung nachgeordnete Einrichtung, beispielsweise eine Beladestation oder eine einer Beladestation in vertikaler Richtung entgegenfahrende Transferstation übergeschoben, welche zumindest einen Teil der Höhendifferenz zwischen Ausgangs- und Endniveau überbrückt. Durch die durch das Überschieben stattgefundene Übergabe von der einen an die nachgeordnete Einrichtung können erneut Artikel auf dem Ausgangsiveau bereitgestellt werden, die dann als nächstes übergeben werden. Eine in horizontaler Förderrichtung letzte Einrichtung, beispielsweise eine Beladestation, erreicht schließlich das Endniveau und gibt auf diesem die Artikel wieder ab, sei es nach unten durch Absetzen, beispielsweise durch Wegziehen der bei einer als Jalousiekopf ausgeführten Beladestation durch eine oder zwei gegenläufig bewegliche Jalousien gebildeten Auflagefläche unter den Artikeln, oder wiederum durch horizontales Überschieben mittels einer Übergabevorrichtung.

Das Überschieben der Artikel auf die Auflagefläche der der jeweiligen Einrichtung nachgeordneten Einrichtung muss hierbei so weit bis auf die Auflagefläche der in horizontaler Förderrichtung nachgeordneten Einrichtung erfolgen, dass einerseits sichergestellt ist, dass die Artikel nicht von der Auflagefläche fallen können, und dass andererseits eine gegebenenfalls vorgesehene Übergabevorrichtung der in horizontaler Förderrichtung nachfolgenden Einrichtung wiederum die Artikel selbst von hinten weiter schieben kann. Ferner ist es aufgrund der vertikalen Relativbeweglichkeit der Einrichtungen wichtig, dass die jeweils eigenen Übergabevorrichtungen und Auflageflächen der Einrichtungen einander kollisionsfrei passieren können. Eine vertikale Relativbewegung kann daher nach dem Überschieben erst erfolgen, wenn die Übergabevorrichtung der in horizontaler Förderrichtung vorgeordneten Einrichtung wieder so weit zurückgezogen worden ist, bis sie die Auflagefläche der in horizontaler Förderrichtung nachgeordneten Einrichtung verlassen hat.

Ein sich hieraus ergebender Nachteil ist, dass mit vertikalen Relativbewegungen zwischen in vertikaler Richtung relativbeweglichen, einander in einer horizontalen Förderrichtung nachgeordneten, jeweils eine Auflagefläche umfassenden Einrichtungen, von denen zumindest die in horizontaler Förderrichtung vorgeordnete Einrichtung eine Übergabevorrichtung aufweist, welche Artikel von der Auflagefläche der in horizontaler Förderrichtung vorgeordneten Einrichtung durch Überschieben auf die Auflagefläche der in horizontaler Förderrichtung nachgeordneten Einrichtung übergibt, abgewartet werden muss, bis die Übergabevorrichtung der in horizontaler Förderrichtung vorgeordneten Einrichtung und die Auflagefläche der in horizontaler Förderrichtung nachgeordneten Einrichtung einander bei einer vertikalen Relativbewegung der beiden Einrichtungen kollisionsfrei passieren können.

Es ist ersichtlich, dass dieses Abwarten die Taktung nachteilig beeinträchtigt.

Zur Bildung eines Stapels mit zwei Stapellagen aus jeweils mehreren gruppierten Artikeln neben einem Endabschnitt eines Rollenförderers ist durch JP 2007-217020A bekannt, Artikel, die in mehreren parallelen Bahnen ungeordnet auf dem Rollenförderer eintreffen, am Ende des Rollenförderes aufzustauen, so dass diese geordnet in quer zu einer Förderrichtung des Rollenförderers verlaufenden, parallelen Reihen nebeneinander zum Stillstand kommen. Anschließend wird eine die obere Stapellage bildende, durch eine vom Ende des Rollenförderers aus gesehen vorgegebene Anzahl von Reihen gebildete erste Gruppe von Artikeln vermittels mehreren, von unterhalb zwischen den Rollen des sich vom Ende des Rollenförderers ausgehend um eine der vorgegebenen Anzahl von Reihen entsprechende Strecke entgegen der Förderrichtung des Rollenförderers erstreckenden Endabschnitts des Rollenförderers auftauchenden Lamellen angehoben. Die Lamellen weisen jeweils die Form eines liegenden L auf, wobei ein erster Schenkel des Ls vertikal nach unten orientiert ist, durch einen Rollenspalt zwischen benachbarten Rollen des Rollenförderers hindurch führt und mit einem Hebemechanismus verbunden ist, der die Lamellen gemeinsam anhebt. Der verbleibende, zweite Schenkel einer jeden Lamelle erstreckt sich parallel zum Rollenspalt. Durch das Anheben der ersten Gruppe von Artikeln werden erneut Artikel zum Ende des Rollenförderers unter die zweiten Schenkel der Lamellen befördert, wo sie sich erneut zu einer nunmehr die untere Stapellage bildende, durch eine vom Ende des Rollenförderers aus gesehen vorgegebene Anzahl von Reihen gebildete zweite Gruppe von Artikeln formieren. Gemeinsam mit einem Absperrschieber, der den Zulauf von Artikeln vor dem Endabschnitt des Rollenförderers absperrt, wird ein kammförmiger Schieber, der ein quer zu den Lamellen verlaufendes Rückenteil aufweist, von dem aus zwischen die Lamellen greifende Zähne oder Zinken vertikal nach unten abstehen, von oberhalb abgesenkt. Die Zähne oder Zinken des Schiebers reichen durch die zweiten Schenkel der Lamellen hindurch bis hinab zur zweiten Gruppe von Artikeln. Der Schieber streift die erste und die zweite Gruppe von Artikeln zeitgleich quer zur Förderrichtung des Rollenförderers und parallel zur Erstreckung der zweiten Schenkel der Lamellen an einen Stapelplatz ab, wo sie eine untere und eine obere Stapellage eines hierdurch am Stapelplatz errichteten Stapels bilden.

Durch GB 957,236 ist bekannt, einen auf einer Palette aufstehenden Stapel von Artikeln zu depalettieren, indem der Stapel von unten her vermittels durch die Palette hindurchgehender Ständer angehoben werden. Ein Gabelstapler übernimmt den angehobenen Stapel. Die Palette muss anschließend getrennt abgeführt werden.

EP2825488 offenbart ferner eine Vorrichtung gemäß dem Oberbegriff des Anspruchs 1.

Eine Aufgabe der Erfindung ist es, ein Verfahren und eine Vorrichtung anzugeben, welche eine Steigerung der Taktung bei einem ein Verbringen von Artikeln von einem Ausgangsniveau auf ein höher oder tiefer liegendes Endniveau vorsehenden Umgang mit Artikeln erlaubt.

Die Aufgabe wird jeweils mit den Merkmalen der unabhängigen Ansprüche gelöst. Weitere vorteilhafte Ausgestaltungen werden durch die abhängigen Ansprüche beschrieben.

Ein erster Gegenstand der Erfindung betrifft demnach eine Vorrichtung zum Umgang mit Artikeln, welcher Umgang ein Verbringen von Artikeln von einem Ausgangsniveau auf ein höher oder tiefer liegendes Endniveau durch Übergabe von Artikeln zwischen wenigstens zwei in einer horizontalen Förderrichtung gesehen unmittelbar nacheinander angeordneten, in vertikaler Richtung relativbeweglichen, auch als Station bezeichneten oder bezeichenbaren Einrichtungen vorsieht.

Jeder Einrichtung ist eine zumindest vertikal bewegliche, beispielsweise als eine Auflageebene ausgebildete Auflagefläche zugeordnet, welche zum aufnehmen eines oder mehrerer Artikel, beispielsweise einer Artikellage geeignet ist.

Zumindest der- oder denjenigen Einrichtungen, denen in horizontaler Förderrichtung eine weitere Einrichtung unmittelbar nachgeordnet ist, ist zudem jeweils eine Übergabevorrichtung zugeordnet.

Zumindest eine einer ersten Einrichtung zugeordnete Übergabevorrichtung umfasst einen gemeinsam mit der der ersten Einrichtung zugeordneten Auflagefläche vertikal beweglichen sowie zumindest in und entgegen der Förderrichtung horizontal beweglichen Schubbalken.

Der Schubbalken greift beim Überschieben eines oder mehrerer Artikel von der Auflagefläche der ersten Einrichtung in horizontaler Förderrichtung auf die Auflagefläche der zweiten Einrichtung an den, in Bezug auf die Förderrichtung rückseits des Artikels oder der beispielsweise zu einer Artikellage gruppierten Artikel befindlichen Artikeln an.

Die Vorrichtung zeichnet sich einerseits dadurch aus, dass der Schubbalken in einer Draufsicht kammförmig mit von einem Rückenteil aus in Richtung zur einer der ersten Einrichtung in Förderrichtung nachgeordneten, zweiten Einrichtung abstehenden Zähnen oder Zinken ausgebildet ist. Die Zähne oder Zinken des kammförmigen Schubbalkens der Übergabevorrichtung der ersten Einrichtung erstrecken sich somit horizontal in Förderrichtung zu einem oder mehreren im Verlauf des Umgangs mit Artikeln von der Auflagefläche der ersten Einrichtung auf die Auflagefläche einer in Förderrichtung nachgeordneten, zweiten Einrichtung überzuschiebenden Artikeln.

Die Vorrichtung zeichnet sich ferner dadurch aus, dass die Auflagefläche der zweiten Einrichtung an ihrer der ersten Einrichtung zugewandten Seite mit den Zähnen oder Zinken des kammförmigen Schubbalkens der Übergabevorrichtung der ersten Einrichtung korrespondierende Aussparungen aufweist.

Die Aussparungen in der Auflagefläche der zweiten Einrichtung korrespondieren derart mit den Zähnen oder Zinken des kammförmigen Schubbalkens der Übergabevorrichtung der ersten Einrichtung, dass die Zähne oder Zinken des kammförmigen Schubbalkens der Übergabevorrichtung der ersten Einrichtung bei einer vertikalen Relativbewegung der ersten und der zweiten Einrichtung durch die Auflagefläche der zweiten Einrichtung hindurchtauchen können. Dadurch können sich die Zähne oder Zinken des kammförmigen Schubbalkens und die Auflagefläche bei einer vertikalen Relativbewegung kollisionsfrei passieren, ohne dass der Schubbalken zuvor über die Auflagefläche der ersten Einrichtung zurückgezogen werden muss.

Sich hieraus ergebende Vorteile sind die Möglichkeit eines sofortigen Beginns der vertikalen Relativbewegung zwischen der ersten und der zweiten Einrichtung, sobald die Artikel mittels der Übergabevorrichtung von der Auflagefläche der ersten Einrichtung auf die Auflagefläche der zweiten Einrichtung übergeschoben worden sind, noch bevor die Zähne oder Zinken des Schubbalkens der Übergabevorrichtung der ersten Einrichtung zumindest ganz von der Auflagefläche der zweiten Einrichtung zurückgezogen worden ist. Diese Elimination von Wartezeiten führt zu einer Steigerung der Taktung.

Die Zähne oder Zinken können stabförmig ausgebildet sein, wobei sich die Stablängsachsen jeweils parallel zur horizontalen Förderrichtung erstrecken und wobei die Aussparungen als parallel zur horizontalen Förderrichtung verlaufende Schlitze mit einer zumindest der Erstreckung der einzelnen Stäbe quer zur horizontalen Förderrichtung entsprechenden Weite ausgeführt sind.

Die Zähne oder Zinken können sägezahnartig ausgebildet sein, wobei die Enden der sägezahnartigen Zähne oder Zinken spitz zulaufend oder beispielsweise abgerundet, oder abgeplattet, etwa trapezförmig, ausgebildet sein können. Jeder sägezahnartige Zahn oder Zinken des Schubbalkens der Übergabevorrichtung der ersten Einrichtung reicht in eine in ihrer Geometrie in einer Draufsicht mit dem entsprechenden Zahn oder Zinken korrespondierende, zurückspringende Aussparung der Auflagefläche der zweiten Einrichtung. Jeder zwischen benachbarten Aussparungen verbleibender Vorsprung der Auflagefläche der zweiten Einrichtung reicht in einen Zwischenraum zwischen benachbarten Vorsprüngen des Schubbalkens der Übergabevorrichtung der ersten Einrichtung. Die mit Aussparungen versehene, der ersten Einrichtung zugewandte Seite der Auflagefläche der zweiten Einrichtung ist hierbei ebenfalls sägezahnartig ausgebildet, wobei zwischen benachbarten Aussparungen verbleibende Vorsprünge ebenfalls spitz zulaufend oder abgerundet, oder abgeplattet, etwa trapezförmig, ausgebildet sein können.

Denkbar sind ferner weitere Varianten korrespondierender Geometrien, welche sofort nach dem Überschieben eine vertikale Relativbewegung der ersten und der zweiten Einrichtung unter gleichzeitigem horizontalen Zurückziehen des Schubbalkens der Übergabevorrichtung der ersten Einrichtung zulassen.

Zusätzliche Varianten korrespondierender Geometrien ergeben sich, wenn auf ein Zurückziehen des Schubbalkens der Übergabevorrichtung der ersten Einrichtung verzichtet wird, solange dessen Zähne oder Zinken in Eingriff mit den Aussparungen der Auflagefläche der zweiten Einrichtung stehen. Hierbei sind beispielsweise T-förmige Zähne oder Zinken denkbar, wobei der Querbalken des Ts jeden Zahns oder Zinkens den rückseitig überzuschiebenden Artikeln zugewandt ist. Mit einem horizontalen Zurückziehen des Schubbalkens der Übergabevorrichtung der ersten Einrichtung muss hierbei so lange abgewartet werden, bis die Zähne oder Zinken nicht mehr in Eingriff mit den Aussparungen der Auflagefläche der zweiten Einrichtung stehen. Da jedoch nach der vertikalen Relativbewegung genügend Zeit verbleibt, bis eine erneute Übergabe von Artikeln durch Überschieben von der ersten auf die zweite Einrichtung erfolgt, wird hierdurch die Taktung nicht oder zumindest nicht wesentlich beeinträchtigt.

Der Abstand zwischen benachbarten Zähnen oder Zinken an deren den überzuschiebenden Artikeln zugewandten Enden ist vorzugsweise derart bemessen, dass weder ein Artikel zwischen die Zähne oder Zinken gelangen kann, noch dass ein Artikel durch einseitiges Angreifen eines Zahns oder Zinkens an seiner Position innerhalb einer Gruppierung von Artikeln gedreht werden kann. Zusammengefasst ist der Abstand so bemessen, dass beispielsweise gruppierte Artikel durch in horizontaler Förderrichtung gesehen rückseitiges Angreifen des Schubbalkens während des Überschiebens weder ihre Position relativ zu den verbleibenden Artikeln innerhalb einer Gruppierung von Artikeln, noch ihre Ausrichtung relativ zu den verbleibenden Artikeln innerhalb einer Gruppierung von Artikeln verändern. Dadurch ergibt sich eine bevorzugt feine Ausführung der Zähne oder Zinken des kammförmigen Schubbalkens, wobei bei einem Überschieben bevorzugt wenigstens zwei, vorzugsweise mindestens drei Zähne oder Zinken rückseitig an einem Artikel oder an einem in horizontaler Förderrichtung gesehen hinteren Artikel einer Gruppierung von Artikeln zum Angriff kommen.

Denkbar sind in diesem Zusammenhang auswechselbare Schubbalken mit abhängig von den überzuschiebenden Artikeln verschieden feinen Zähnen oder Zinken oder auswechselbare Kammelemente bestehend jeweils aus einem Rückenteil mit abhängig von den überzuschiebenden Artikeln verschieden feinen Zähnen oder Zinken, einhergehend mit auswechselbaren Auflageflächen der zweiten Einrichtung mit korrespondierenden Aussparungen oder auswechselbaren, der ersten Einrichtung zugewandten Endabschnitten der Auflagefläche der zweiten Einrichtung.

Vorzugsweise überschneiden oder überlappen die Zähne oder Zinken des kammförmigen Schubbalkens der Übergabevorrichtung der ersten Einrichtung in Förderrichtung gesehen bis zu einer Rückseite eines oder einer sich nach erfolgtem Überschieben von der ersten zur zweiten Einrichtung in einer kurz als Ruhelage bezeichneten Endposition auf der Auflagefläche der zweiten Einrichtung befindlichen Artikels oder Artikellage. Hierdurch kann unmittelbar mit dem Ende des Überschiebens mit einer vertikalen Relativbewegung zwischen der ersten und der zweiten Einrichtung begonnen werden, einhergehend mit einer besonders hohen erzielbaren Taktung.

Zur zusätzlichen Verringerung der Kollisionsgefahr und einem früheren Beginn einer vertikalen Relativbewegung zwischen der ersten und der zweiten Einrichtung können die Zähne oder Zinken zumindest bei einem Umgang mit relativ leichten Artikeln Borsten umfassen, die an der Auflagefläche der zweiten Einrichtung bei einer vertikalen Relativbewegung abstreifen können. Die Zähne oder Zinken können hierbei beispielsweise ganz aus Borsten bestehen oder lediglich an deren den überzuschiebenden Artikeln zugewandten Enden mit Borsten besetzt sein.

Bei der ersten Einrichtung kann es sich um eine Transferstation handeln, welche vom Ausgangsniveau aus einer beispielsweise als weitere Transferstation oder als Beladestation ausgebildeten zweiten Einrichtung unter Überbrückung zumindest eines Teils der Höhendifferenz zwischen Ausgangs- und Endniveau entgegenfährt.

Bei einem Umgang mit Artikeln unter Überbrückung einer zwischen einem Ausgangs- und einem Endniveau liegenden Höhendifferenz hat sich gezeigt, dass die Taktung unter Anderem von den Verfahrwegen der die Höhendifferenz überbrückenden Einrichtungen abhängt, wobei eine um so höhere Taktung erreicht werden kann, je kürzer die Verfahrwege ausfallen.

So weist eine Einrichtung, welche die komplette Höhendifferenz allein überbrückt, in den meisten Fällen eine schlechtere Taklung auf, als zwei oder mehrere Einrichtungen, die gemeinsam die Höhendifferenz überbrücken und einander die Artikel jeweils übergeben.

Zur Verringerung der Verfahrwege und einer damit einhergehenden Steigerung der Taktung kann demnach vorgesehen sein, dass jede Einrichtung nur einen Teil der Höhendifferenz überbrückt, wobei die Summe der von allen Einrichtungen überbrückten Teile dabei der gesamten Höhendifferenz entspricht. Die Einrichtungen übergeben einander die Artikel auf beispielsweise zwischen den Teilen der Höhendifferenz liegenden konstanten oder veränderlichen Übergabeniveaus.

Die Vorrichtung kann demnach mindestens eine Transferstation umfassen. Bei einer Transferstation handelt es sich vereinfacht dargestellt um eine zwischen einer voranstehenden Station, beispielsweise einer Gruppierstation, welche Artikel zu Artikellagen gruppiert, und beispielsweise einer Beladestation, welche den Transport der von der Gruppierstation erzeugten Artikellagen zu einem Stapelplatz besorgt, angeordnete Hebebühne. Die Transferstation übernimmt eine Artikellage nach der anderen von der Gruppierstation auf einem Ausgangsniveau und fährt der Beladestation auf ein zwischen Ausgangs- und Endniveau liegendes Transferniveau entgegen, um die Verfahrwege der Beladestation zu verkürzen und dadurch die Anzahl der innerhalb eines Zeitintervalls möglichen Verfahrwege der Beladestation zu steigern.

Während des Überschiebens können sich die erste und die zweite Einrichtung synchron in vertikaler Richtung bewegen.

Auch die zweite Einrichtung kann mit einer Übergabevorrichtung ausgestattet sein, welche zum Abtransport einzelner oder mehrerer, beispielsweise zu Artikellagen gruppierter Artikel von der Auflagefläche der zweiten Einrichtung in Förderrichtung vorgesehen sein kann, beispielsweise zur Übergabe an eine der zweiten Einrichtung in horizontaler Förderrichtung nachgeordnete Einrichtung.

Die Übergabevorrichtung der zweiten Einrichtung kann ebenfalls einen gemeinsam mit der der zweiten Einrichtung zugeordneten Auflagefläche vertikal beweglichen sowie zumindest in und entgegen der Förderrichtung horizontal beweglichen Schubbalken umfassen. Dieser kann auf seiner der ersten Einrichtung zugewandten Seite ebenfalls mit mit den Zähnen oder Zinken des kammförmigen Schubbalkens der Übergabevorrichtung der ersten Einrichtung korrespondierenden Aussparungen versehen sein. Damit können auch die Schubbalken der Übergabevorrichtungen der ersten und der zweiten Einrichtung einander kollisionsfrei in vertikaler Richtung passieren, selbst wenn die Zähne oder Zinken des kammförmigen Schubbalkens der Übergabevorrichtung der ersten Einrichtung noch bis in den Schubbalken der zweiten Einrichtung reichen.

Beispielsweise kann der Schubbalken der Übergabevorrichtung der zweiten Einrichtung quer zur horizontalen Förderrichtung gesehen zickzackförmig ausgebildet sein, wobei die Zähne oder Zinken des kammförmigen Schubbalkens der Übergabevorrichtung der ersten Einrichtung und des kammförmigen Schubbalkens der Übergabevorrichtung der zweiten Einrichtung jeweils zu deren Enden hin verjüngend zulaufend ausgebildet sein können.

Zudem kann wahlweise vorgesehen sein, dass ein zumindest temporär den in Förderrichtung frontseitig befindlichen Artikeln zugeordneter Anlagebalken der beispielsweise zu einer Artikellage gruppierten Artikel zumindest kurz vor oder bei Erreichen der Ruhelage mit geringem Abstand zu den vordersten Artikeln vorauseilt oder an diesen anliegt. Damit kann die Überschubvorrichtung wenigstens einen an den Artikeln angreifenden Schubbalken sowie wenigstens einen frontseitig an der Artikellage angreifenden Anlagebalken umfassen, der in seiner Bewegung in Überschubrichtung zumindest temporär mit dem Schubbalken gekoppelt ist und auf diese Weise das Umfallen oder Verrutschen von Artikeln bei schnellen Überschub- und Bremsvorgängen verhindern kann. Wahlweise kann zumindest einer der Schubbalken und/oder wenigstens einer der Anlagebalken mit einem endlos umlaufenden Zugmittelantrieb zur Herstellung der Schubbewegungen gekoppelt sein. Es sind jedoch auch andere Antriebe für die Schub- und Anlagebalken möglich, so bspw. Linearantriebe.

Wichtig ist hervorzuheben, dass die Übergabe von Artikeln zwischen in vertikaler Richtung relativbeweglichen Einrichtungen beispielsweise von einer ersten Einrichtung an eine zweite, gegenüber der ersten Einrichtung in vertikaler Richtung relativbewegliche Einrichtung und/oder von einer ersten, gegenüber einer zweiten Einrichtung in vertikaler Richtung relativbeweglichen Einrichtung an die zweite Einrichtung und/oder von einer ersten, gegenüber einer zweiten Einrichtung in vertikaler Richtung relativbeweglichen Einrichtung an die zweite, gegenüber der ersten Einrichtung in vertikaler Richtung ebenfalls relativbewegliche Einrichtung stattfinden kann.

Ein zweiter Gegenstand der Erfindung betrifft ein Verfahren zum Umgang mit Artikeln, welcher Umgang ein Verbringen von Artikeln von einem Ausgangsniveau auf ein höher oder tiefer liegendes Endniveau durch Übergabe von Artikeln zwischen wenigstens zwei in einer horizontalen Förderrichtung gesehen unmittelbar nacheinander angeordneten, in vertikaler Richtung relativbeweglichen, auch als Station bezeichneten oder bezeichenbaren Einrichtungen vorsieht.

Das Verfahren sieht eine Übergabe der Artikel durch Überschieben von einer Auflagefläche einer ersten Einrichtung auf eine Auflagefläche einer zweiten Einrichtung vermittels einer der ersten Einrichtung zugeordneten Übergabevorrichtung vor.

Die Übergabevorrichtung ist als ein in Bezug auf die Auflagefläche der ersten Einrichtung horizontal beweglicher Schubbalken ausgeführt, der sich zumindest am Ende des Überschiebevorgangs zum Teil bis über die Auflagefläche der zweiten Einrichtung erstreckt.

Dabei überschneiden sich zumindest am Ende des Überschiebevorgangs der Schubbalken der Übergabevorrichtung der ersten Einrichtung und die Auflagefläche der zweiten Einrichtung wenigstens teilweise.

Das Verfahren sieht vor, unverzüglich, vorzugsweise sofort am Ende des Überschubvorgangs mit der vertikalen Relativbewegung zwischen den beiden Einrichtungen zu beginnen.

Damit es bei der noch während der Überschneidung zumindest beginnenden vertikalen Relativbewegung zu keiner Kollision des Schubbalkens der Übergabevorrichtung der ersten Einrichtung mit der Auflagefläche der zweiten Einrichtung kommt, sieht das Verfahren vor, dass der Schubbalken der Übergabevorrichtung der ersten Einrichtung kammförmig mit einem Rückenteil und in horizontaler Richtung von diesem in Richtung zur zweiten Einrichtung abstehenden Zähnen oder Zinken ausgebildet ist, und die Auflagefläche der zweiten Einrichtung mit Aussparungen ausgestattet ist, die zumindest im Bereich der Überschneidung des Schubbalkens der Übergabevorrichtung der ersten Einrichtung und der Auflagefläche der zweiten Einrichtung mit den Zähnen oder Zinken des Schubbalkens korrespondieren, so dass die Zähne oder Zinken des Schubbalkens bei einer vertikalen Relativbewegung via der Aussparungen durch die Auflagefläche der zweiten Einrichtung hindurchtauchen können.

Das Verfahren kann vorsehen, dass sich während des Überschiebens die Auflageflächen der ersten und der zweiten Einrichtung gemeinsam und weitgehend synchron vertikal nach oben oder unten bewegen.

Das Verfahren erlaubt alle Vorteile der zuvor beschriebenen Vorrichtung nutzbar zu machen.

Genauso wie die zuvor beschriebene Vorrichtung alternativ oder zusätzlich einzelne oder eine Kombination mehrerer zuvor und/oder in der nachfolgenden Beschreibung zu den in den Zeichnungen dargestellten Ausführungsbeispielen in Verbindung mit der Vorrichtung oder mit dem Verfahren erwähnte Merkmale aufweisen kann, kann auch das zuvor beschriebene Verfahren alternativ oder zusätzlich einzelne oder eine Kombination mehrerer zuvor und/oder in der nachfolgenden Beschreibung zu den in den Zeichnungen dargestellten Ausführungsbeispielen in Verbindung mit der Vorrichtung oder dem Verfahren erwähnte Merkmale aufweisen.

Sowohl die zuvor beschriebene Vorrichtung, als auch das zuvor beschriebene Verfahren können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

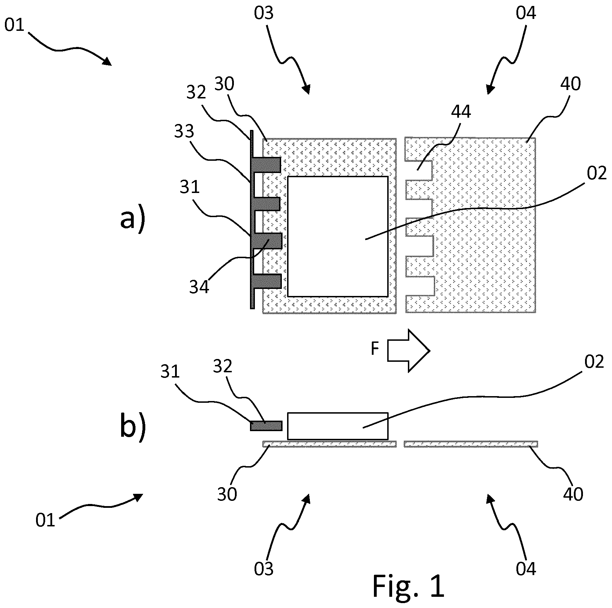

- Fig. 1: ein erstes Ausführungsbeispiel einer ein erfindungsgemäßes Verfahren zum Umgang mit Artikeln ausführenden Vorrichtung zum Umgang mit Artikeln in einer ersten Momentaufnahme in einer Draufsicht in Fig. 1 a) und in einer Seitenansicht in Fig. 1 b).

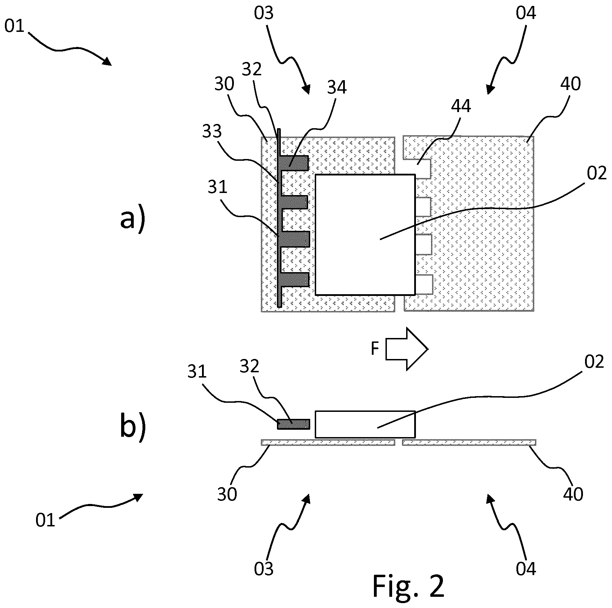

- Fig. 2: eine zeitlich unmittelbar auf die Momentaufnahme in Fig. 1 folgende Momentaufnahme der ein erfindungsgemäßes Verfahren zum Umgang mit Artikeln ausführenden, erfindungsgemäßen Vorrichtung zum Umgang mit Artikeln gemäß eines ersten Ausführungsbeispiels in einer Draufsicht in Fig. 2 a) und in einer Seitenansicht in Fig. 2 b).

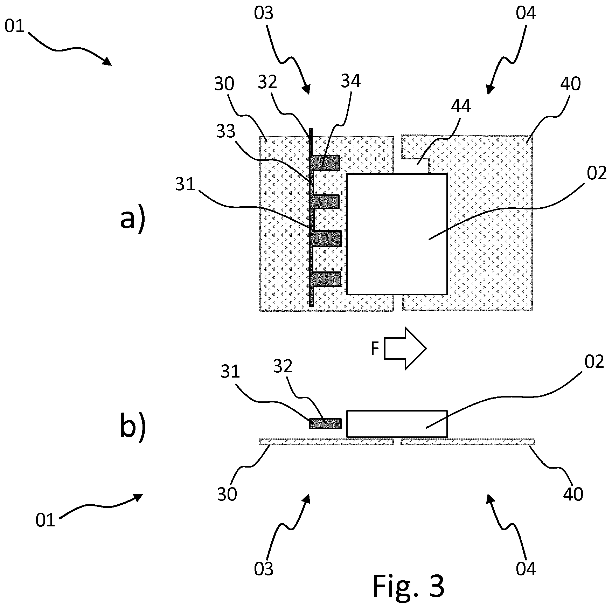

- Fig. 3: eine zeitlich unmittelbar auf die Momentaufnahme in Fig. 2 folgende Momentaufnahme der ein erfindungsgemäßes Verfahren zum Umgang mit Artikeln ausführenden, erfindungsgemäßen Vorrichtung zum Umgang mit Artikeln gemäß eines ersten Ausführungsbeispiels in einer Draufsicht in Fig. 3 a) und in einer Seitenansicht in Fig. 3 b).

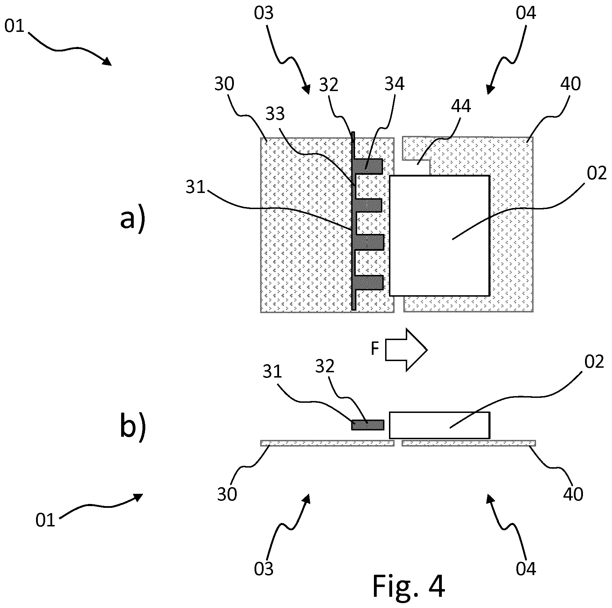

- Fig. 4: eine zeitlich unmittelbar auf die Momentaufnahme in Fig. 3 folgende Momentaufnahme der ein erfindungsgemäßes Verfahren zum Umgang mit Artikeln ausführenden, erfindungsgemäßen Vorrichtung zum Umgang mit Artikeln gemäß eines ersten Ausführungsbeispiels in einer Draufsicht in Fig. 4 a) und in einer Seitenansicht in Fig. 4 b).

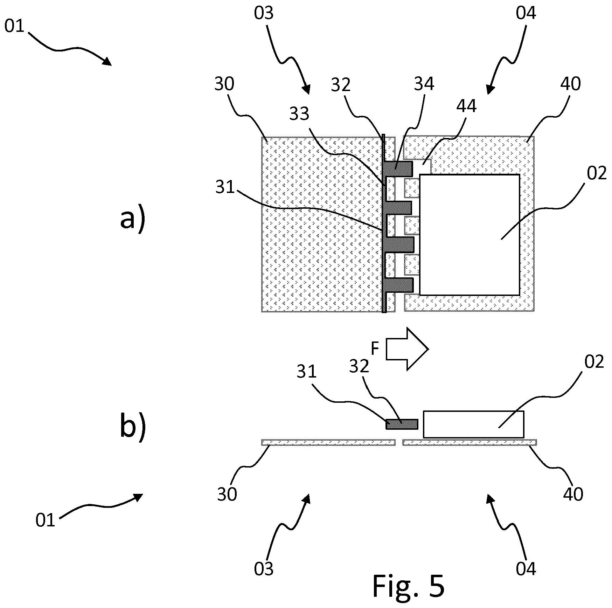

- Fig. 5: eine zeitlich unmittelbar auf die Momentaufnahme in Fig. 4 folgende Momentaufnahme der ein erfindungsgemäßes Verfahren zum Umgang mit Artikeln ausführenden, erfindungsgemäßen Vorrichtung zum Umgang mit Artikeln gemäß eines ersten Ausführungsbeispiels in einer Draufsicht in Fig. 5 a) und in einer Seitenansicht in Fig. 5 b).

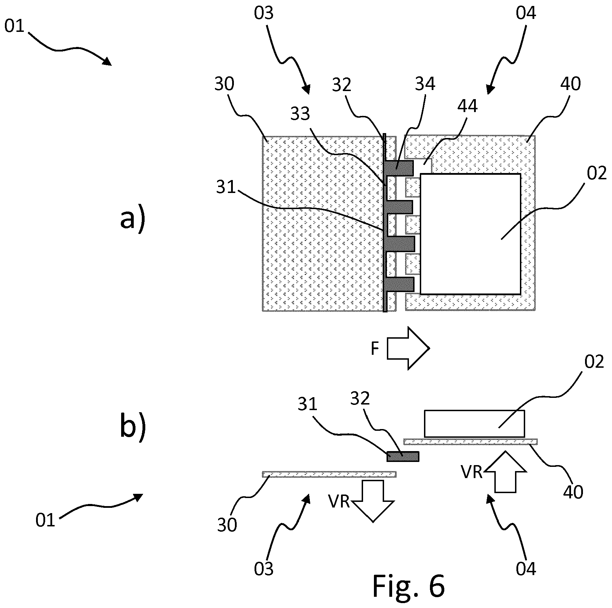

- Fig. 6: eine zeitlich unmittelbar auf die Momentaufnahme in Fig. 5 folgende Momentaufnahme der ein erfindungsgemäßes Verfahren zum Umgang mit Artikeln ausführenden, erfindungsgemäßen Vorrichtung zum Umgang mit Artikeln gemäß eines ersten Ausführungsbeispiels in einer Draufsicht in Fig. 6 a) und in einer Seitenansicht in Fig. 6 b).

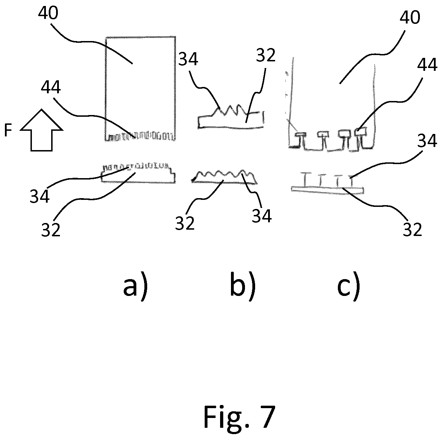

- Fig. 7: verschiedene Ausführungsbeispiele von Geometrien von Zähnen oder Zinken eines Schubbalkens und von mit korrespondierenden Aussparungen versehener Auflageflächen einer Vorrichtung zum Umgang mit Artikeln in einer Draufsicht.

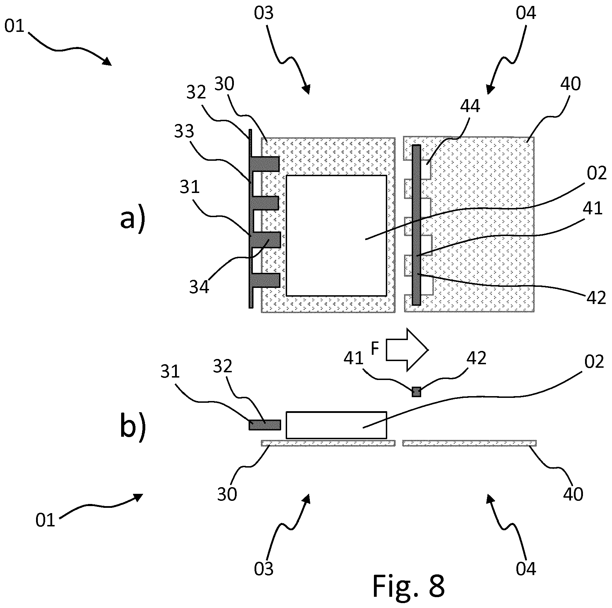

- Fig. 8: ein zweites Ausführungsbeispiel einer ein erfindungsgemäßes Verfahren zum Umgang mit Artikeln ausführenden Vorrichtung zum Umgang mit Artikeln in einer ersten Momentaufnahme in einer Draufsicht in Fig. 8 a) und in einer Seitenansicht in Fig. 8 b).

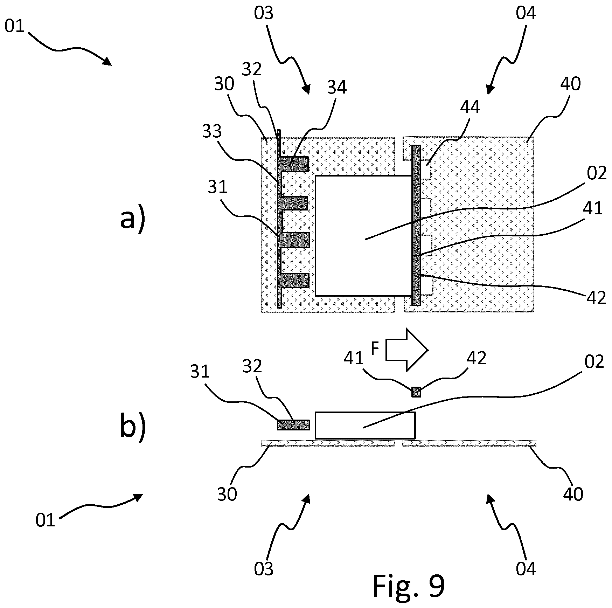

- Fig. 9: eine zeitlich unmittelbar auf die Momentaufnahme in Fig. 8 folgende Momentaufnahme der ein erfindungsgemäßes Verfahren zum Umgang mit Artikeln ausführenden, erfindungsgemäßen Vorrichtung zum Umgang mit Artikeln gemäß eines zweiten Ausführungsbeispiels in einer Draufsicht in Fig. 9 a) und in einer Seitenansicht in Fig. 9 b).

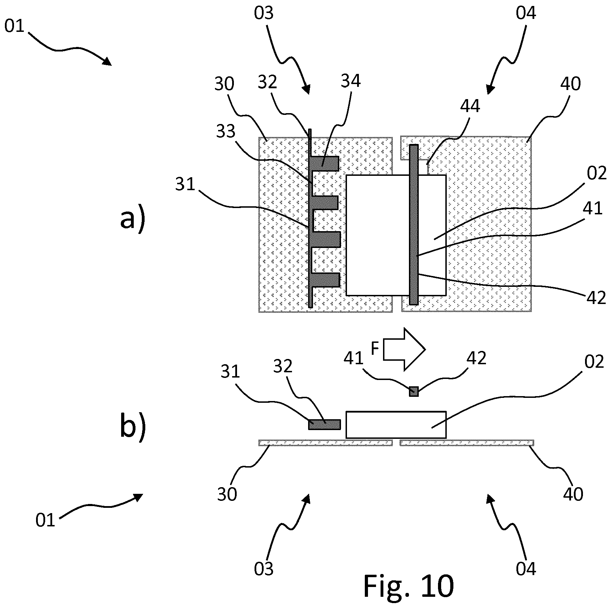

- Fig. 10: eine zeitlich unmittelbar auf die Momentaufnahme in Fig. 9 folgende Momentaufnahme der ein erfindungsgemäßes Verfahren zum Umgang mit Artikeln ausführenden, erfindungsgemäßen Vorrichtung zum Umgang mit Artikeln gemäß eines zweiten Ausführungsbeispiels in einer Draufsicht in Fig. 10 a) und in einer Seitenansicht in Fig. 10 b).

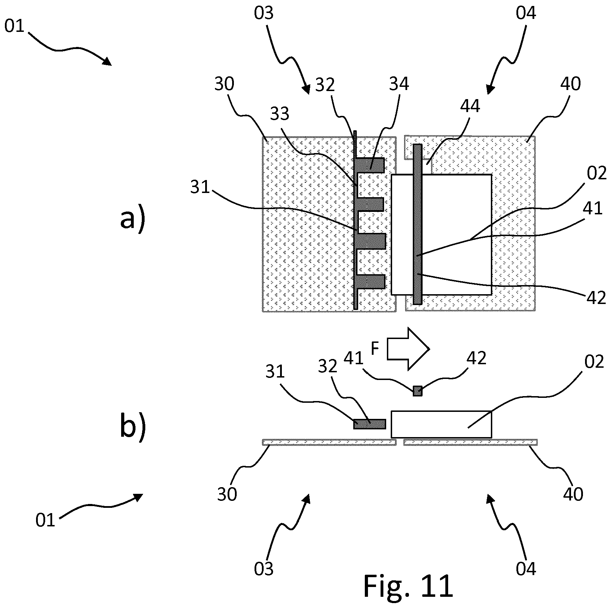

- Fig. 11: eine zeitlich unmittelbar auf die Momentaufnahme in Fig. 10 folgende Momentaufnahme der ein erfindungsgemäßes Verfahren zum Umgang mit Artikeln ausführenden, erfindungsgemäßen Vorrichtung zum Umgang mit Artikeln gemäß eines zweiten Ausführungsbeispiels in einer Draufsicht in Fig. 11 a) und in einer Seitenansicht in Fig. 11 b).

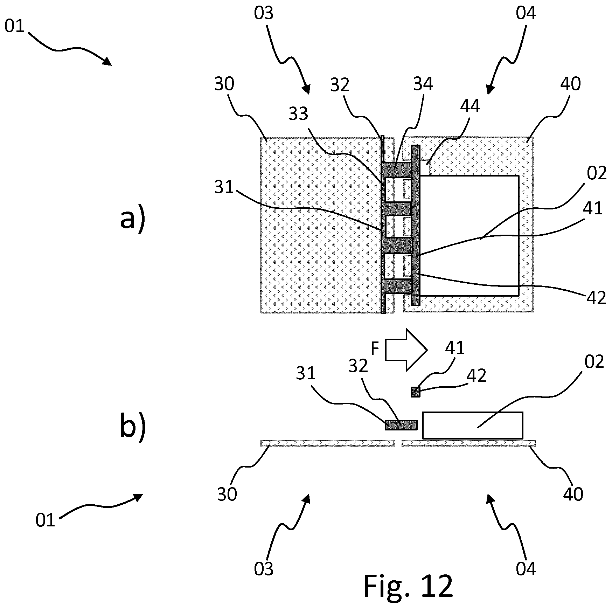

- Fig. 12: eine zeitlich unmittelbar auf die Momentaufnahme in Fig. 11 folgende Momentaufnahme der ein erfindungsgemäßes Verfahren zum Umgang mit Artikeln ausführenden, erfindungsgemäßen Vorrichtung zum Umgang mit Artikeln gemäß eines zweiten Ausführungsbeispiels in einer Draufsicht in Fig. 12 a) und in einer Seitenansicht in Fig. 12 b).

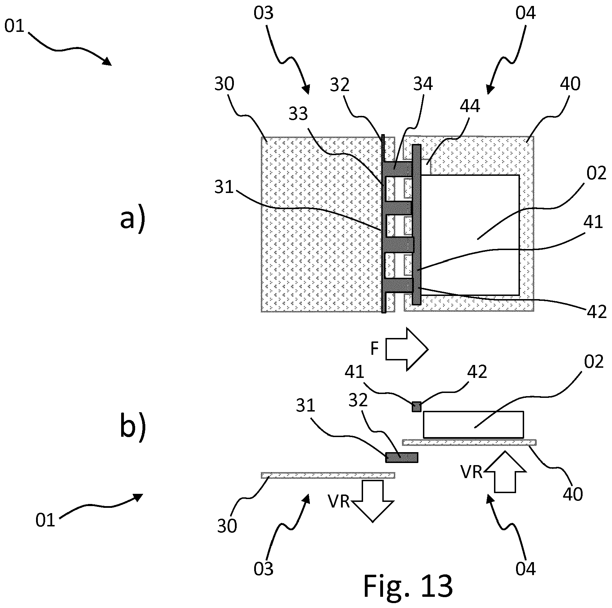

- Fig. 13: eine zeitlich unmittelbar auf die Momentaufnahme in Fig. 12 folgende Momentaufnahme der ein erfindungsgemäßes Verfahren zum Umgang mit Artikeln ausführenden, erfindungsgemäßen Vorrichtung zum Umgang mit Artikeln gemäß eines zweiten Ausführungsbeispiels in einer Draufsicht in Fig. 13 a) und in einer Seitenansicht in Fig. 13 b).

Fig. 1 bis Fig. 13 zeigen ganz oder teilweise eine Vorrichtung 01 zum Umgang mit Artikeln 02, welcher Umgang ein Verbringen von Artikeln 02 von einem Ausgangsniveau auf ein höher oder tiefer liegendes Endniveau durch Übergabe von Artikeln 02 zwischen wenigstens zwei in einer durch einen Pfeil angedeuteten, horizontalen Förderrichtung F gesehen unmittelbar nacheinander angeordneten, in vertikaler Richtung relativbeweglichen Einrichtungen 03, 04 vorsieht.

Jeder Einrichtung 03, 04 der Vorrichtung 01 ist eine zumindest vertikal bewegliche, beispielsweise als eine Auflageebene ausgebildete Auflagefläche 30, 40 zugeordnet. Die Auflageflächen 30, 40 der Einrichtungen 03, 04 dienen zum aufnehmen eines oder mehrerer Artikel 02, beispielsweise einer Artikellage, indem sie diese von unten abstützen und dadurch tragen.

Zumindest der- oder denjenigen Einrichtungen 03, 04 der (Fig. 1 bis Fig. 6) oder denen (Fig. 8 bis Fig. 13) in horizontaler Förderrichtung F eine weitere Einrichtung unmittelbar nachgeordnet ist, ist zudem jeweils eine Übergabevorrichtung 31, 41 zugeordnet.

Zumindest eine einer ersten Einrichtung 03 zugeordnete Übergabevorrichtung 31 umfasst einen gemeinsam mit der der ersten Einrichtung 03 zugeordneten Auflagefläche 30 vertikal beweglichen sowie zumindest in und entgegen der durch den Pfeil angedeuteten Förderrichtung F horizontal beweglichen Schubbalken 32.

Der Schubbalken 32 greift beim Überschieben eines oder mehrerer Artikel 02 von der Auflagefläche 30 der ersten Einrichtung 03 in horizontaler Förderrichtung F auf die Auflagefläche 40 der zweiten Einrichtung 04 an den, in Bezug auf die Förderrichtung F rückseits des Artikels 02 oder bei beispielsweise zu einer Artikellage gruppierten Artikeln 02 an den rückseits der Artikellage befindlichen Artikeln 02 an.

Zumindest gegen Ende des Überschiebens hin überschneiden oder überlappen sich wenigstens ein der zweiten Einrichtung 04 zugewandter Teil des Schubbalkens 32 der Übergabevorrichtung 31 der ersten Einrichtung 03 und eine der ersten Einrichtung 03 zugewandte Partie der Auflagefläche 40 der zweiten Einrichtung 04, wie in Fig. 5 und Fig. 12 dargestellt.

Der Schubbalken ist in einer Draufsicht kammförmig mit von einem Rückenteil 33 aus horizontal in Richtung zur der ersten Einrichtung 03 in Förderrichtung F unmittelbar nachgeordneten, zweiten Einrichtung 04 abstehenden Zähnen oder Zinken 34 ausgebildet. Die Zähne oder Zinken 34 des kammförmigen Schubbalkens 32 der Übergabevorrichtung 31 der ersten Einrichtung 03 erstrecken sich somit horizontal in Förderrichtung F zu einem oder mehreren im Verlauf des Umgangs mit Artikeln 02 von der Auflagefläche 30 der ersten Einrichtung 03 auf die Auflagefläche 40 einer dieser in Förderrichtung F unmittelbar nachgeordneten, zweiten Einrichtung 04 überzuschiebenden Artikeln 02. Die Auflagefläche 40 der zweiten Einrichtung 04 weist in einer Draufsicht zumindest im Bereich der Partie der Überschneidung oder Überlappung an ihrer der ersten Einrichtung 03 zugewandten Seite mit den Zähnen oder Zinken 34 des kammförmigen Schubbalkens 32 der Übergabevorrichtung 31 der ersten Einrichtung 03 korrespondierende Aussparungen 44 auf. die Aussparungen 44 in der Auflagefläche 40 der zweiten Einrichtung 04 korrespondieren derart mit den Zähnen oder Zinken 34 des kammförmigen Schubbalkens 32 der Übergabevorrichtung 31 der ersten Einrichtung 03, dass die Zähne oder Zinken 34 des kammförmigen Schubbalkens 32 der Übergabevorrichtung 31 der ersten Einrichtung 03 bei einer in Fig. 6 und Fig. 13 durch Pfeile angedeuteten vertikalen Relativbewegung VR zwischen der ersten Einrichtung 03 und der zweiten Einrichtung 04 via der Aussparungen 44 durch die Auflagefläche 40 der zweiten Einrichtung 04 hindurchtauchen können. Dadurch können sich die Zähne oder Zinken 34 des kammförmigen Schubbalkens 32 und die Auflagefläche 40 der zweiten Einrichtung 04 bei einer vertikalen Relativbewegung VR kollisionsfrei passieren, ohne dass der Schubbalken 32 zuvor über die Auflagefläche 30 der ersten Einrichtung 03 zurückgezogen werden muss.

Die Zähne oder Zinken 34 können wie bei den in Fig. 1 bis 6 und in Fig. 8 bis Fig. 13 dargestellten Vorrichtungen 01, oder wie in Fig. 7 a) dargestellt stabförmig ausgebildet sein. Die Stablängsachsen erstrecken sich hierbei jeweils parallel zur horizontalen Förderrichtung F. Die Aussparungen 44 sind hierbei als vertikal durch die Auflagefläche 40 hindurchgehende, parallel zur horizontalen Förderrichtung F verlaufende Schlitze mit einer zumindest der Erstreckung der einzelnen stabförmig ausgebildeten Zähne oder Zinken 34 quer zur horizontalen Förderrichtung F entsprechenden Weite ausgeführt.

Die Zähne oder Zinken 34 und ebenfalls die korrespondierenden Aussparungen 44 können wie in Fig. 7 b) dargestellt sägezahnartig ausgebildet sein, wobei jeder Zahn oder Zinken 34 des Schubbalkens 32 der Übergabevorrichtung 31 der ersten Einrichtung 03 in eine zurückspringende Aussparung 44 der Auflagefläche 40 der zweiten Einrichtung 04 reicht und ein zwischen benachbarten Aussparungen 44 verbleibender Vorsprung der Auflagefläche 40 der zweiten Einrichtung 04 in einen Zwischenraum zwischen benachbarten Zähnen oder Zinken 34 des Schubbalkens 32 der Übergabevorrichtung 31 der ersten Einrichtung 03 reicht.

Die Enden der sägezahnartigen Zähne oder Zinken 34 und/oder der zwischen benachbarten Aussparungen 44 verbleibenden Vorsprünge der Auflagefläche 40 können wie in Fig. 7 b) oben dargestellt spitz zulaufend oder wie in Fig. 7 b) unten dargestellt abgerundet, oder abgeplattet, etwa trapezförmig, ausgebildet sein. Im Falle einer Abplattung sind die Zähne oder Zinken 34 und/oder der zwischen benachbarten Aussparungen 44 verbleibenden Vorsprünge in einer Draufsicht beispielsweise trapezförmig.

Denkbar sind ferner weitere Varianten korrespondierender Geometrien der Zähne oder Zinken 34 des Schubbalkens 32 der Übergabevorrichtung 31 ersten Einrichtung 03 und der Aussparungen 44 der Auflagefläche 40 der zweiten Einrichtung 04, welche sofort nach dem Überschieben eine vertikale Relativbewegung VR der ersten und der zweiten Einrichtung 03, 04 unter gleichzeitigem horizontalen Zurückziehen des Schubbalkens 32 der Übergabevorrichtung 31 der ersten Einrichtung 03 zulassen.

Zusätzliche mögliche Varianten korrespondierender Geometrien der Zähne oder Zinken 34 des Schubbalkens 32 der Übergabevorrichtung 31 ersten Einrichtung 03 und der Aussparungen 44 der Auflagefläche 40 der zweiten Einrichtung 04 ergeben sich, wenn auf ein horizontales Zurückziehen des Schubbalkens 32 der Übergabevorrichtung 31 der ersten Einrichtung 03 entgegen der Förderrichtung F solange verzichtet wird, solange dessen Zähne oder Zinken 34 in Eingriff mit den Aussparungen 44 der Auflagefläche 40 der zweiten Einrichtung 04 stehen.

Bei einer solchen Ausgestaltung können die Zähne oder Zinken 34 beispielsweise wie in Fig. 7 c) dargestellt T-förmig ausgeführt sein, wobei der Querbalken des Ts jeden Zahns oder Zinkens 34 den Rückseiten der überzuschiebenden Artikeln 02 zugewandt ist.

Mit einem horizontalen Zurückziehen des Schubbalkens 32 der Übergabevorrichtung 31 der ersten Einrichtung 03 muss hierbei so lange abgewartet werden, bis die Zähne oder Zinken 34 nicht mehr in Eingriff mit den Aussparungen 44 der Auflagefläche 40 der zweiten Einrichtung 04 stehen. Da jedoch nach der vertikalen Relativbewegung VR genügend Zeit verbleibt, bis eine erneute Übergabe von Artikeln 02 durch Überschieben von der ersten auf die zweite Einrichtung 03, 04 erfolgt, wird hierdurch die Taktung nicht oder zumindest nicht wesentlich beeinträchtigt.

Wichtig ist hervorzuheben, dass grundsätzlich auch gemischte und/oder unregelmäßige Geometrien der Zähne oder Zinken 34 und der korrespondierenden Aussparungen 44 möglich sind, wie dies zumindest in Fig. 7 b) unten angedeutet ist.

Der Abstand zwischen benachbarten Zähnen oder Zinken 34 an deren den überzuschiebenden Artikeln zugewandten Enden ist vorzugsweise derart bemessen, dass weder ein Artikel 02 beim Überschieben zwischen die Zähne oder Zinken 34 gelangen kann, noch dass ein Artikel 02 durch einseitiges Angreifen eines Zahns oder Zinkens 34 während des Überschiebens an seiner Position innerhalb einer Gruppierung von Artikeln 02 gedreht werden kann.

Zusammengefasst ist der Abstand bevorzugt so bemessen, dass beispielsweise gruppierte Artikel 02 durch in horizontaler Förderrichtung F gesehen rückseitiges Angreifen des Schubbalkens 32 während des Überschiebens weder ihre Position relativ zu den verbleibenden Artikeln 02 innerhalb einer Gruppierung von Artikeln 02, noch ihre Ausrichtung relativ zu den verbleibenden Artikeln 02 innerhalb einer Gruppierung von Artikeln 02 verändern.

Dadurch ergibt sich eine bevorzugt feine Ausführung der Zähne oder Zinken 34 des kammförmigen Schubbalkens 32.

Besonders bevorzugt ist der Abstand zwischen benachbarten Zähnen oder Zinken 34 an deren den überzuschiebenden Artikeln 02 zugewandten Enden derart bemessen, dass bei einem Überschieben bevorzugt wenigstens zwei, vorzugsweise mindestens drei Zähne oder Zinken 34 rückseitig an jedem Artikel 02 anliegen, an dem der Schubbalken 32 in horizontaler Förderrichtung F gesehen rückseitig zum Angriff kommt.

Um mit ein und derselben Vorrichtung 01 mit verschiedenartigen Artikeln 02 umgehen zu können, kann mindestens ein auswechselbarer Schubbalken 32 mit abhängig von den überzuschiebenden Artikeln 02 verschieden feinen Zähnen oder Zinken 34 oder mindestens ein auswechselbares Kammelement bestehend jeweils aus einem Rückenteil 33 mit an diesem angeordneten, abhängig von den überzuschiebenden Artikeln 02 verschieden feinen Zähnen oder Zinken 34, einhergehend mit mindestens einer auswechselbaren Auflagefläche 40 der zweiten Einrichtung 04 mit korrespondierenden Aussparungen 44 oder mindestens einem auswechselbaren, der ersten Einrichtung 03 zugewandten Endabschnitt der Auflagefläche 40 der zweiten Einrichtung 04 vorgesehen sein.

Nach erfolgtem Überschieben von der ersten Einrichtung 03 zur zweiten Einrichtung 04 überschneiden oder überlappen die Zähne oder Zinken 34 des kammförmigen Schubbalkens 32 der Übergabevorrichtung 31 der ersten Einrichtung 03 in Förderrichtung F gesehen bis zu einer Rückseite eines oder einer sich in einer kurz als Ruhelage bezeichneten, in den Fig. 5, Fig. 6, Fig. 12 und Fig. 13 beispielhaft dargestellten Endposition auf der Auflagefläche 40 der zweiten Einrichtung 04 befindlichen Artikels 02 oder Artikellage. Die Tiefe der Aussparungen 44 in der Auflagefläche 40 der zweiten Einrichtung 04 ist in Förderrichtung F gesehen mindestens derart bemessen, dass die Zähne oder Zinken 34 des kammförmigen Schubbalkens 32 der Übergabevorrichtung 31 der ersten Einrichtung 03 die Auflagefläche 40 bei einer vertikalen Relativbewegung VR kollisionsfrei passieren können, auch wenn sich der Schubbalken 32 noch in einer Position größter Auslenkung befindet, in der die Enden seiner Zähne oder Zinken 34 an der Rückseite eines oder einer sich in der Ruhe- oder Endposition auf der Auflagefläche 40 der zweiten Einrichtung 04 befindlichen Artikels 02 oder Artikellage anliegen. Hierdurch kann unmittelbar mit dem Ende des Überschiebens mit einer vertikalen Relativbewegung VR zwischen der ersten Einrichtung 03 und der zweiten Einrichtung 04 begonnen werden, einhergehend mit einer besonders hohen erzielbaren Taktung.

Bei der ersten Einrichtung 03 kann es sich wie in Fig. 1 bis 6 und in Fig. 8 bis 13 sich um eine Transferstation handeln, welche vom Ausgangsniveau aus einer beispielsweise als weitere Transferstation oder als Beladestation ausgebildeten zweiten Einrichtung 04 unter Überbrückung zumindest eines Teils der Höhendifferenz zwischen Ausgangs- und Endniveau entgegenfährt.

Auch die zweite Einrichtung 04 kann wie in Fig. 8 bis Fig. 13 dargestellt mit einer Übergabevorrichtung 41 ausgestattet sein, welche zum Abtransport einzelner oder mehrerer, beispielsweise zu Artikellagen gruppierter Artikel 02 von der Auflagefläche 40 der zweiten Einrichtung 04 in Förderrichtung F vorgesehen ist, beispielsweise zur Übergabe an eine der zweiten Einrichtung 04 in horizontaler Förderrichtung F nachgeordnete Einrichtung.

Die Übergabevorrichtung 41 der zweiten Einrichtung 04 kann wie in Fig. 8 bis Fig. 13 dargestellt einen gemeinsam mit der der zweiten Einrichtung 04 zugeordneten Auflagefläche 40 vertikal beweglichen sowie zumindest in und entgegen der Förderrichtung F horizontal beweglichen Schubbalken 42 umfassen.

Der Schubbalken 42 der Übergabevorrichtung 41 der zweiten Einrichtung 04 kann auf seiner der ersten Einrichtung 03 zugewandten Seite ebenfalls mit den Zähnen oder Zinken 34 des kammförmigen Schubbalkens 32 der Übergabevorrichtung 31 der ersten Einrichtung 03 korrespondierenden Aussparungen versehen sein. Damit können auch die Schubbalken 32, 42 der Übergabevorrichtungen 31, 41 der ersten Einrichtung 03 und der zweiten Einrichtung 04 einander kollisionsfrei in vertikaler Richtung passieren, selbst wenn die Zähne oder Zinken 34 des kammförmigen Schubbalkens 32 der Übergabevorrichtung 31 der ersten Einrichtung 03 noch bis in den Schubbalken 42 der Übergabevorrichtung 41 der zweiten Einrichtung 04 reichen.

Alternativ oder zusätzlich ist denkbar, dass die Übergabevorrichtung der zweiten Einrichtung beispielsweise antreibbare Rollen oder Ketten umfasst, deren an die zweite Einrichtung 04 übergebenen Artikel 02 zugewandten Oberseiten zugleich die Auflagefläche 40 bilden. In diesem Fall ist denkbar, dass die Aussparungen 44 der Auflagefläche 40 der zweiten Einrichtung 04 durch Abstände zwischen benachbarten Rollen oder Ketten gebildet sind.

Die Vorrichtung 01 kann darüber hinaus einen zumindest temporär den in Förderrichtung F während des Überschiebens frontseitig befindlichen Artikeln 02 zugeordneten Anlagebalken umfassen, der beim Überschieben beispielsweise zu einer Artikellage gruppierter Artikel 02 zumindest kurz vor oder bei Erreichen der auch als Ruhelage bezeichneten Endposition mit geringem Abstand zu den vordersten Artikeln 02 vorauseilt oder an diesen anliegt.

Die zuvor beschriebene Vorrichtung 01 ist in der Lage, ein Verfahren zum Umgang mit Artikeln 02 auszuführen, welcher Umgang ein Verbringen von Artikeln 02 von einem Ausgangsniveau auf ein höher oder tiefer liegendes Endniveau durch Übergabe von Artikeln 02 zwischen wenigstens zwei in einer horizontalen Förderrichtung F gesehen unmittelbar nacheinander angeordneten, in vertikaler Richtung relativbeweglichen, auch als Station bezeichneten oder bezeichenbaren Einrichtungen 03, 04 vorsieht.

Ein solches Verfahren sieht vor, dass:
- die Übergabe der Artikel 02 durch Überschieben von einer Auflagefläche 30 einer ersten Einrichtung 03 auf eine Auflagefläche 40 einer zweiten Einrichtung 04 vermittels einer der ersten Einrichtung 03 zugeordneten Übergabevorrichtung 31 erfolgt,
- die Übergabevorrichtung 31 als ein in Bezug auf die Auflagefläche 30 der ersten Einrichtung 03 horizontal beweglicher Schubbalken 32 ausgeführt ist,
- sich zumindest am Ende des Überschiebevorgangs der Schubbalken 32 der Übergabevorrichtung 31 der ersten Einrichtung 03 und die Auflagefläche 40 der zweiten Einrichtung 04 wenigstens teilweise überschneiden oder überlappen, und
- am Ende des Überschubvorgangs mit der vertikalen Relativbewegung VR zwischen den beiden Einrichtungen 03, 04 begonnen wird.

Damit es bei der noch während der Überschneidung zumindest beginnenden vertikalen Relativbewegung VR zu keiner Kollision des Schubbalkens 32 der Übergabevorrichtung 31 der ersten Einrichtung 03 mit der Auflagefläche 40 der zweiten Einrichtung 04 kommt, ist der Schubbalken 32 der Übergabevorrichtung 31 der ersten Einrichtung 03 kammförmig mit einem Rückenteil 33 und in horizontaler Richtung von diesem in Richtung zur zweiten Einrichtung 04 abstehenden Zähnen oder Zinken 34 ausgebildet, und ist die Auflagefläche 40 der zweiten Einrichtung 04 auf ihrer der ersten Einrichtung 03 zugewandten Seite mit Aussparungen 44 ausgestattet, die zumindest im Bereich der Überschneidung des Schubbalkens 32 der Übergabevorrichtung 31 der ersten Einrichtung 03 und der Auflagefläche 40 der zweiten Einrichtung 04 in einer Draufsicht mit den Zähnen oder Zinken 34 des Schubbalkens korrespondieren.

Das Verfahren sieht ferner vor, dass die Zähne oder Zinken 34 des Schubbalkens 32 bei einer vertikalen Relativbewegung VR via der Aussparungen 44 durch die Auflagefläche 40 der zweiten Einrichtung 04 hindurchtauchen.

Wichtig ist hervorzuheben, dass die Vorrichtung 01 derart ausgebildet sein kann, dass das Verfahren vorsehen kann, dass sich während des Überschiebens die Auflageflächen 30, 40 der ersten und der zweiten Einrichtung 03, 04 gemeinsam und weitgehend synchron vertikal nach oben oder unten bewegen

Ebenfalls wichtig ist hervorzuheben, dass die dargestellten Ausführungsformen lediglich Beispiele darstellen, wie die erfindungsgemäße Vorrichtung oder das erfindungsgemäße Verfahren ausgestaltet sein können. Sie stellen keine abschließende Begrenzung dar.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Vorrichtung
- 02: Artikel
- 03: (erste) Einrichtung
- 04: (zweite) Einrichtung
- 30: Auflagefläche (der ersten Einrichtung 03)
- 31: Übergabevorrichtung (der ersten Einrichtung 03)
- 32: Schubbalken
- 33: Rückenteil
- 34: Zahn oder Zinken
- 40: Auflagefläche (der zweiten Einrichtung 04)
- 41: Übergabevorrichtung (der zweiten Einrichtung 04)
- 42: Schubbalken
- 44: Aussparung

- F: (horizontale) Förderrichtung
- VR: vertikale Relativbewegung zwischen der ersten und zweiten Einrichtung

## Patentansprüche

1. Vorrichtung (01) zum Umgang mit Artikeln (02), welcher Umgang ein Verbringen von Artikeln (02) von einem Ausgangsniveau auf ein höher oder tiefer liegendes Endniveau unter Übergabe von Artikeln (02) zwischen wenigstens zwei in einer horizontalen Förderrichtung (F) gesehen unmittelbar nacheinander angeordneten, in vertikaler Richtung relativbeweglichen Einrichtungen (03, 04) vorsieht,
- jeder Einrichtung (03, 04) eine zumindest vertikal bewegliche Auflagefläche (30, 40) zugeordnet ist, welche zum aufnehmen eines oder mehrerer Artikel (02) dient,
- zumindest der- oder denjenigen Einrichtungen (03, 04), der oder denen in horizontaler Förderrichtung (F) eine weitere Einrichtung (04) unmittelbar nachgeordnet ist, jeweils eine Übergabevorrichtung (31, 41) zugeordnet ist,
- zumindest eine einer ersten Einrichtung (03) zugeordnete Übergabevorrichtung (31) einen gemeinsam mit der der ersten Einrichtung (03) zugeordneten Auflagefläche (30) vertikal beweglichen sowie zumindest in und entgegen der Förderrichtung (F) horizontal beweglichen Schubbalken (32) umfasst,
- der Schubbalken (32) beim Überschieben in Bezug auf die Förderrichtung (F) rückseits des oder der Artikel (02) angreift,
- zumindest am Ende des Überschiebens sich wenigstens ein der zweiten Einrichtung (04) zugewandter Teil des Schubbalkens (32) der Übergabevorrichtung (31) der ersten Einrichtung (03) und eine der ersten Einrichtung (03) zugewandte Partie der Auflagefläche (40) der zweiten Einrichtung (04) überlappen,
**dadurch gekennzeichnet, dass** der Schubbalken (32) in einer Draufsicht kammförmig mit von einem Rückenteil (33) aus horizontal in Richtung zur der ersten Einrichtung (03) in Förderrichtung (F) unmittelbar nachgeordneten, zweiten Einrichtung (04) abstehenden Zähnen oder Zinken (34) ausgebildet ist, und die Auflagefläche (40) der zweiten Einrichtung (04) zumindest an ihrer der ersten Einrichtung (03) zugewandten Seite mit den Zähnen oder Zinken (34) des kammförmigen Schubbalkens (32) der Übergabevorrichtung (31) der ersten Einrichtung (03) korrespondierende Aussparungen (44) aufweist, wobei die Zähne oder Zinken (34) bei einer vertikalen Relativbewegung (VR) via der Aussparungen (44) durch die Auflagefläche (40) der zweiten Einrichtung (04) hindurchtauchen.

2. Vorrichtung nach Anspruch 1, wobei die Zähne oder Zinken (34) stabförmig ausgebildet sind, wobei sich die Stablängsachsen jeweils parallel zur horizontalen Förderrichtung (F) erstrecken, und wobei die Aussparungen (44) als parallel zur horizontalen Förderrichtung (F) verlaufende Schlitze mit einer zumindest der Erstreckung der einzelnen stabförmig ausgebildeten Zähne oder Zinken (34) quer zur horizontalen Förderrichtung (F) entsprechenden Weite ausgeführt sind.

3. Vorrichtung nach Anspruch 1, wobei die Zähne oder Zinken (34) und die Aussparungen (44) sägezahnartig ausgebildet sind, wobei jeder Zahn oder Zinken (34) des Schubbalkens (32) der Übergabevorrichtung (31) der ersten Einrichtung (03) in eine zurückspringende Aussparung (44) der Auflagefläche (04) der zweiten Einrichtung (04) reicht und ein zwischen benachbarten Aussparungen (44) verbleibender Vorsprung der Auflagefläche (40) der zweiten Einrichtung (04) in einen Zwischenraum zwischen benachbarten Zähnen oder Zinken (34) des Schubbalkens (32) der Übergabevorrichtung (31) der ersten Einrichtung (03) reicht.

4. Vorrichtung nach Anspruch 3, wobei die Enden der sägezahnartigen Zähne oder Zinken (34) und/oder der zwischen benachbarten Aussparungen (44) verbleibenden Vorsprünge spitz zulaufend oder abgerundet, oder abgeplattet, etwa trapezförmig, ausgebildet sind.

5. Vorrichtung nach Anspruch 1, wobei die Zähne oder Zinken (34) T-förmig sind, wobei der Querbalken des Ts jeden Zahns oder Zinkens (34) den Rückseiten der überzuschiebenden Artikeln (02) zugewandt ist.

6. Vorrichtung nach einem der voranstehenden Ansprüche, wobei der Abstand zwischen benachbarten Zähnen oder Zinken (34) an deren den überzuschiebenden Artikeln (02) zugewandten Enden derart bemessen ist, dass weder ein Artikel (02) zwischen die Zähne oder Zinken (34) gelangen kann, noch dass ein Artikel (02) durch einseitiges Angreifen eines Zahns oder Zinkens (34) an seiner Position innerhalb einer Gruppierung von Artikeln (02) gedreht werden kann.

7. Vorrichtung nach einem der voranstehenden Ansprüche, wobei der Abstand zwischen benachbarten Zähnen oder Zinken (34) an deren den überzuschiebenden Artikeln (02) zugewandten Enden derart bemessen ist, dass bei einem Überschieben wenigstens zwei Zähne oder Zinken (34) rückseitig an einem Artikel (02) oder an einem in horizontaler Förderrichtung (F) gesehen hinteren Artikel (02) einer Gruppierung von Artikeln (02) zum Angriff kommen.

8. Vorrichtung nach Anspruch 6 oder 7, wobei mindestens ein auswechselbarer Schubbalken (32) mit abhängig von den überzuschiebenden Artikeln (02) verschieden feinen Zähnen oder Zinken (34) oder mindestens ein auswechselbares Kammelement bestehend jeweils aus einem Rückenteil (33) mit abhängig von den überzuschiebenden Artikeln (02) verschieden feinen Zähnen oder Zinken (34), einhergehend mit mindestens einer auswechselbaren Auflagefläche (40) der zweiten Einrichtung (04) mit korrespondierenden Aussparungen (44) oder mindestens einem auswechselbaren, der ersten Einrichtung (03) zugewandten Endabschnitt der Auflagefläche (40) der zweiten Einrichtung (04) vorgesehen sind.

9. Vorrichtung nach einem der voranstehenden Ansprüche, wobei die Zähne oder Zinken (34) des kammförmigen Schubbalkens (32) der Übergabevorrichtung (31) der ersten Einrichtung (03) in Förderrichtung (F) gesehen bis zu einer Rückseite eines oder einer sich nach erfolgtem Überschieben von der ersten zur zweiten Einrichtung (04) in einer Endposition auf der Auflagefläche (40) der zweiten Einrichtung (04) befindlichen Artikels (02) oder Artikellage überschneiden oder überlappen.

10. Vorrichtung nach einem der voranstehenden Ansprüche, wobei die Zähne oder Zinken (34) zumindest bei einem Umgang mit relativ leichten Artikeln (02) Borsten umfassen, die an der Auflagefläche (40) der zweiten Einrichtung (04) bei einer vertikalen Relativbewegung (VR) abstreifen können.

11. Vorrichtung nach einem der voranstehenden Ansprüche, wobei es sich bei der ersten Einrichtung (03) um eine Transferstation handelt, welche vom Ausgangsniveau aus einer zweiten Einrichtung unter Überbrückung zumindest eines Teils der Höhendifferenz zwischen Ausgangs- und Endniveau entgegenfährt.

12. Vorrichtung nach einem der voranstehenden Ansprüche, wobei auch die zweite Einrichtung (04) mit einer Übergabevorrichtung (41) ausgestattet ist, welche zum Abtransport einzelner oder mehrerer Artikel (02) von der Auflagefläche (40) der zweiten Einrichtung (04) in Förderrichtung (F) vorgesehen ist.

13. Vorrichtung nach Anspruch 12, wobei die Übergabevorrichtung (41) der zweiten Einrichtung (04) einen gemeinsam mit der der zweiten Einrichtung (04) zugeordneten Auflagefläche (40) vertikal beweglichen sowie zumindest in und entgegen der Förderrichtung (F) horizontal beweglichen Schubbalken (42) umfasst.

14. Vorrichtung nach einem der voranstehenden Ansprüche, wobei ein zumindest temporär den in Förderrichtung frontseitig befindlichen Artikeln (02) zugeordneter Anlagebalken vorgesehen ist, der beim Überschieben zumindest kurz vor oder bei Erreichen der Endposition mit geringem Abstand zu den vordersten Artikeln (02) vorauseilt oder an diesen anliegt.

15. Verfahren zum Umgang mit Artikeln (02), welcher Umgang ein Verbringen von Artikeln (02) von einem Ausgangsniveau auf ein höher oder tiefer liegendes Endniveau unter Übergabe von Artikeln (02) zwischen wenigstens zwei in einer horizontalen Förderrichtung (F) gesehen unmittelbar nacheinander angeordneten, in vertikaler Richtung relativbeweglichen Einrichtungen (03, 04) vorsieht, wobei:
- die Übergabe der Artikel (02) durch Überschieben von einer Auflagefläche (30) einer ersten Einrichtung (03) auf eine Auflagefläche (40) einer zweiten Einrichtung (04) vermittels einer der ersten Einrichtung (03) zugeordneten Übergabevorrichtung (31) erfolgt,
- die Übergabevorrichtung (31) als ein in Bezug auf die Auflagefläche (30) der ersten Einrichtung horizontal beweglicher Schubbalken (32) ausgeführt ist, ,
- sich zumindest am Ende des Überschiebevorgangs der Schubbalken (32) der Übergabevorrichtung (31) der ersten Einrichtung (03) und die Auflagefläche (40) der zweiten Einrichtung (04) wenigstens teilweise überschneiden oder überlappen,
- am Ende des Überschubvorgangs mit der vertikalen Relativbewegung (VR) zwischen den beiden Einrichtungen (03, 04) begonnen wird,
- der Schubbalken (32) der Übergabevorrichtung (31) der ersten Einrichtung (03) kammförmig mit einem Rückenteil (33) und in horizontaler Richtung von diesem in Richtung zur zweiten Einrichtung (04) abstehenden Zähnen oder Zinken (34) ausgebildet ist,
- die Auflagefläche (40) der zweiten Einrichtung (04) mit Aussparungen (44) ausgestattet ist, die zumindest im Bereich der Überschneidung des Schubbalkens (32) der Übergabevorrichtung (31) der ersten Einrichtung (03) und der Auflagefläche (40) der zweiten Einrichtung (04) mit den Zähnen oder Zinken (34) des Schubbalkens (32) korrespondieren, und
- die Zähne oder Zinken (34) des Schubbalkens (32) bei einer vertikalen Relativbewegung (VR) via der Aussparungen (44) durch die Auflagefläche (40) der zweiten Einrichtung (04) hindurchtauchen.

## Claims

1. An apparatus (01) for the handling of articles (02), which handling provides moving the articles (02) from an initial level to a higher or lower final level, with the articles (02) being transferred between at least two devices (03, 04) arranged immediately succeeding one another as viewed in a horizontal conveying direction (F), the devices (03, 04) being movable relative to one another in a vertical direction,
- each device (03, 04) having associated with it an at least vertically movable support surface (30, 40) serving to receive one or more articles (02);
- at least that one device or those more devices (03, 04) from which another device (04) is arranged immediately downstream in a horizontal conveying direction (F) being associated with a transfer apparatus (31, 41) each;
- at least one transfer apparatus (31) associated with a first device (03) comprising a pushing bar (32) that is vertically movable together with the support surface (30) associated with the first device (03) as well as horizontally movable at least in and opposite to the conveying direction (F);
- the pushing bar (32) engaging with the one or more articles (02) at the back, in relation to the conveying direction (F), during the transfer pushing;
- at least a part of the pushing bar (32) of the transfer apparatus (31) of the first device (03), which part of the pushing bar (32) faces toward the second device (04), and a section of the support surface (40) of the second device (04), which section of the support surface (40) faces toward the first device (03), overlapping at least at the end of the transfer pushing;
**characterised in that** the pushing bar (32) in a top view is formed with teeth or prongs (34) protruding from a back part (33) comb-like horizontally toward the second device (04) arranged immediately downstream in conveying direction (F) from the first device (03), and **in that** the support surface (40) of the second device (04) has recesses (44) at least at its side facing toward the first device (03), the recesses (44) corresponding to the teeth or prongs (34) of the comb-shaped pushing bar (32) of the transfer apparatus (31) of the first device (03), wherein the teeth or prongs (34) dip through the support surface (40) of the second device (04) via the recesses (44) in a vertical relative movement (VR).

2. The apparatus as recited in claim 1 wherein the teeth or prongs (34) are formed rod-shaped, wherein the longitudinal axes of the rods each extend parallel to the horizontal conveying direction (F), and wherein the recesses (44) are designed as slots running parallel to the horizontal conveying direction (F), the slots having a width corresponding at least to the extent of the individual rod-shaped teeth or prongs (34) transverse to the horizontal conveying direction (F).

3. The apparatus as recited in claim 1 wherein the teeth or prongs (34) and the recesses (44) are formed saw tooth-like, wherein each tooth or prong (34) of the pushing bar (32) of the transfer apparatus (31) of the first device (03) reaches into an indented recess (44) of the support surface (40) of the second device (04) and a protrusion of the support surface (40) of the second device (04) remaining between adjacent recesses (44) reaches into an interspace between adjacent teeth or prongs (34) of the pushing bar (32) of the transfer apparatus (31) of the first device (03).

4. The apparatus as recited in claim 3 wherein the ends of the saw tooth-like teeth or prongs (34) and/or of the protrusions remaining between adjacent recesses (44) are formed to be tapering, rounded, or flattened, for instance trapezoidally.

5. The apparatus as recited in claim 1 wherein the teeth or prongs (34) are T-shaped, wherein the cross of the T of each tooth or prong (34) faces toward the backs of the articles (02) to be transfer-pushed.

6. The apparatus as recited in one of the previous claims wherein the space between adjacent teeth or prongs (34) at their ends facing toward the articles (02) to be transfer-pushed is dimensioned such that neither can an article (02) pass between the teeth or prongs (34) nor can an article (02) be rotated at its position within a grouping of articles (02) by one-sided engagement of a tooth or prong (34).

7. The apparatus as recited in one of the previous claims wherein the space between adjacent teeth or prongs (34) at their ends facing toward the articles (02) to be transfer-pushed is dimensioned such that, during a transfer pushing, at least two teeth or prongs (34) come into engagement at the back of an article (02) or of a rear article (02) of a grouping of articles (02) as viewed in the horizontal conveying direction (F).

8. The apparatus as recited in claim 6 or 7 wherein at least one replaceable pushing bar (32) with differently fine teeth or prongs (34) depending on the articles (02) to be transfer-pushed or at least one replaceable comb element consisting in each case of a back part (33) with differently fine teeth or prongs (34) depending on the articles (02) to be transfer-pushed is provided along with at least one replaceable support surface (40) of the second device (04) with corresponding recesses (44) or with at least one replaceable end section of the support surface (40) of the second device (04), said end section facing toward the first device (03).

9. The apparatus as recited in one of the previous claims wherein the teeth or prongs (34) of the comb-shaped pushing bar (32) of the transfer apparatus (31) of the first device (03) intersect or overlap up to a back side, as viewed in conveying direction (F), of an article (02) or article layer located in a final position on the support surface (40) of the second device (04) after the transfer pushing from the first to the second device (04) has been carried out.

10. The apparatus as recited in one of the previous claims, wherein the teeth or prongs (34) comprise bristles, at least when handling relatively light articles (02), which bristles can wipe off on the support surface (40) of the second device (04) during a vertical relative movement (VR).

11. The apparatus as recited in one of the previous claims wherein the first device (03) is a transfer station, which moves from an initial level toward a second device and in the process bridges at least a part of the height difference between the initial level and the final level.

12. The apparatus as recited in one of the previous claims wherein the second device (04) is also equipped with a transfer apparatus (41), which is provided for the removal in conveying direction (F) of individual or several articles (02) from the support surface (40) of the second device (04).

13. The apparatus as recited in claim 12 wherein the transfer apparatus (41) of the second device (04) comprises a pushing bar (42) that is vertically movable together with the support surface (40) associated with the second device (04) as well as horizontally movable at least in and opposite to the conveying direction (F).

14. The apparatus as recited in one of the previous claims wherein a contact bar is provided, which is at least temporarily associated with the articles (02) located in the front in relation to the conveying direction (F), and which runs slightly ahead of the foremost articles (02) or abuts on them at least shortly before or upon reaching the final position during the transfer pushing.

15. A method for the handling of articles (02), which handling provides moving the articles (02) from an initial level to a higher or lower final level, with the articles (02) being transferred between at least two devices (03, 04) arranged immediately succeeding one another as viewed in a horizontal conveying direction (F), the devices (03, 04) being movable relative to one another in a vertical direction, wherein:
- the transfer of the articles (02) is carried out by transfer pushing from one support surface (30) of a first device (03) onto a support surface (40) of a second device (04) by means of a transfer apparatus (31) that is associated with the first device (03);
- the transfer apparatus (31) is designed as a pushing bar (32) that is horizontally movable in relation to the support surface (30) of the first device;
- the pushing bar (32) of the transfer apparatus (31) of the first device (03) and the support surface (40) of the second device (04) at least partially intersect or overlap at least at the end of the transfer pushing procedure;
- the vertical relative movement (VR) between the two devices (03, 04) is started at the end of the transfer pushing procedure;
- the pushing bar (32) of the transfer apparatus (31) of the first device (03) is formed comb-like with a back part (33) and teeth or prongs (34) protruding in horizontal direction from the back part (33) of the comb toward the second device (04);
- the support surface (40) of the second device (04) is provided with recesses (44), the recesses (44) corresponding to the teeth or prongs (34) of the pushing bar (32) at least in the area of the pushing bar (32) of the transfer apparatus (31) of the first device (03) overlapping with the support surface (40) of the second device (04); and
- the teeth or prongs (34) of the pushing bar (32) dip through the support surface (40) of the second device (04) via the recesses (44) in a vertical relative movement (VR).

## Revendications

1. Dispositif (01) de manutention d'articles (02), laquelle manutention prévoit un transfert d'articles (02) d'un niveau de départ à un niveau final situé plus haut ou plus bas, en transférant des articles (02) entre au moins deux dispositifs (03, 04) qui, vus dans une direction horizontale de transport (F), sont disposés directement l'un après l'autre et qui sont déplaçables l'un par rapport à l'autre dans la direction verticale,
- à chaque dispositif (03, 04) est associée une surface d'appui (30, 40) au moins verticalement déplaçable qui sert à recevoir un ou plusieurs articles (02),
- respectivement un dispositif de transfert (31, 41) est associé au moins au ou aux dispositif(s) (03, 04) en aval duquel ou desquels, dans la direction horizontale de transport (F), est disposé directement un autre dispositif (04),
- au moins un dispositif de transfert (31) associé à un premier dispositif (03) comprend une barre de poussée (32) qui est déplaçable verticalement conjointement avec la surface d'appui (30) associée au premier dispositif (03) ainsi que déplaçable horizontalement au moins dans et à l'encontre de la direction de transport (F),
- ladite barre de poussée (32) se prenant, lors du transfert par poussée, sur la face arrière du ou des articles (02), par rapport à la direction de transport (F),
- au moins à la fin du transfert par poussée, au moins une partie de la barre de poussée (32) du dispositif de transfert (31) du premier dispositif (03), laquelle montre vers le deuxième dispositif (04), et une partie de la surface d'appui (40) du deuxième dispositif (04), laquelle montre vers le premier dispositif (03) chevauchent l'une sur l'autre,
**caractérisé par le fait que**, dans une vue de dessus, ladite barre de poussée (32) est réalisée en forme de peigne ayant des dents (34) qui font saillie à partir d'une partie dorsale (33) horizontalement en direction du deuxième dispositif (04) disposé directement en aval du premier dispositif (03) dans la direction de transport (F), et la surface d'appui (40) du deuxième dispositif (04) présente, au moins sur sa face montrant vers le premier dispositif (03), des évidements (44) correspondant avec les dents (34) de la barre de poussée (32) en forme de peigne du dispositif de transfert (31) du premier dispositif (03), dans lequel les dents (34), lors d'un mouvement relatif vertical (VR), passent via les évidements (44) à travers la surface d'appui (40) du deuxième dispositif (04).

2. Dispositif selon la revendication 1, dans lequel les dents (34) sont réalisées en forme de baguette, dans lequel les axes longitudinaux de baguette s'étendent chacun parallèlement à la direction horizontale de transport (F), et dans lequel les évidements (44) sont réalisés en tant que fentes s'étendant parallèlement à la direction horizontale de transport (F) et ayant une largeur correspondant au moins à l'extension transversale à la direction horizontale de transport (F), des dents (34) individuelles réalisées en forme de baguette.

3. Dispositif selon la revendication 1, dans lequel les dents (34) et les évidements (44) sont réalisés à la manière de dents de scie, dans lequel chaque dent (34) de la barre de poussée (32) du dispositif de transfert (31) du premier dispositif (03) s'étend jusque dans un évidement (44) en retrait de la surface d'appui (04) du deuxième dispositif (04), et une projection de la surface d'appui (40) du deuxième dispositif (04), qui reste entre des évidements (44) voisins, s'étend jusque dans un intervalle entre des dents (34) voisines de la barre de poussée (32) du dispositif de transfert (31) du premier dispositif (03).

4. Dispositif selon la revendication 3, dans lequel les extrémités des dents (34) de type dents de scie et/ou des projections restant entre des évidements (44) voisins sont réalisées de manière effilée ou arrondie ou aplatie, par exemple trapézoïdale.

5. Dispositif selon la revendication 1, dans lequel les dents (34) sont en forme de T, dans lequel la barre transversale du T de chaque dent (34) montre vers les faces arrière des articles (02) à transférer en poussant.

6. Dispositif selon l'une quelconque des revendications précédentes, dans lequel la distance séparant des dents (34) voisines est dimensionnée, à leurs extrémités montrant vers les articles (02) à transférer en poussant, de telle sorte que ni un article (02) ne peut passer entre les dents (34) ni un article (02) ne peut être tourné sur sa position au sein d'un groupement d'articles (02) par le fait qu'une dent (34) se prend sur une face.

7. Dispositif selon l'une quelconque des revendications précédentes, dans lequel la distance séparant des dents (34) voisines est dimensionnée, à leurs extrémités montrant vers les articles (02) à transférer en poussant, de telle sorte que, lors d'un transfert par poussée, au moins deux dents (34) se prennent face arrière sur un article (02) ou sur un article (02) arrière d'un groupement d'articles (02), vu dans la direction horizontale de transport (F).

8. Dispositif selon la revendication 6 ou 7, dans lequel sont prévus au moins une barre de poussée (32) échangeable ayant des dents (34) à finesse différente en fonction des articles (02) à transférer en poussant ou au moins un élément en peigne échangeable se composant chacun d'une partie dorsale (33) ayant des dents (34) à finesse différente en fonction des articles (02) à transférer en poussant, allant de pair avec au moins une surface d'appui (40) échangeable du deuxième dispositif (04) avec des évidements (44) correspondants ou au moins une section terminale échangeable de la surface d'appui (40) du deuxième dispositif (04), laquelle montre vers le premier dispositif (03).

9. Dispositif selon l'une quelconque des revendications précédentes, dans lequel les dents (34) de la barre de poussée (32) en forme de peigne du dispositif de transfert (31) du premier dispositif (03) se recouvrent ou chevauchent, vues dans la direction de transport (F), jusqu'à une face arrière d'un article (02) ou d'une couche d'articles se trouvant, après le transfert par poussée depuis le premier au deuxième dispositif (04), dans une position finale sur la surface d'appui (40) du deuxième dispositif (04).

10. Dispositif selon l'une quelconque des revendications précédentes, dans lequel, au moins lors d'une manipulation d'articles (02) relativement légers, les dents (34) présentent des soies qui peuvent racler sur la surface d'appui (40) du deuxième dispositif (04) lors d'un mouvement relatif vertical (VR).

11. Dispositif selon l'une quelconque des revendications précédentes, dans lequel ledit premier dispositif (03) est un poste de transfert qui se rapproche, à partir du niveau de départ, d'un deuxième dispositif en surmontant au moins une partie de la différence de hauteur entre les niveaux de départ et final.

12. Dispositif selon l'une quelconque des revendications précédentes, dans lequel le deuxième dispositif (04) est muni, lui aussi, d'un dispositif de transfert (41) qui est prévu pour évacuer des articles (02) individuels ou plusieurs articles (02) de la surface d'appui (40) du deuxième dispositif (04) dans la direction de transport (F).

13. Dispositif selon la revendication 12, dans lequel le dispositif de transfert (41) du deuxième dispositif (04) comprend une barre de poussée (42) qui peut être déplacée verticalement conjointement avec la surface d'appui (40) associée au deuxième dispositif (04) ainsi que déplaçable horizontalement au moins dans et à l'encontre de la direction de transport (F).

14. Dispositif selon l'une quelconque des revendications précédentes, dans lequel on prévoit une barre d'appui qui est associée au moins temporairement aux articles (02) situés sur la face frontale dans la direction de transport et qui, lors du transfert par poussée, au moins peu de temps avant que la position finale soit atteinte ou lorsque celle-ci est atteinte, devance à faible distance les articles (02) se trouvant le plus en avant ou s'applique contre ceux-ci.

15. Procédé de manutention d'articles (02), laquelle manutention prévoit un transfert d'articles (02) d'un niveau de départ à un niveau final situé plus haut ou plus bas, en transférant des articles (02) entre au moins deux dispositifs (03, 04) qui, vus dans une direction horizontale de transport (F), sont disposés directement l'un après l'autre et qui sont déplaçables l'un par rapport à l'autre dans la direction verticale, dans lequel:
- le transfert des articles (02) se fait en les poussant d'une surface d'appui (30) d'un premier dispositif (03) sur une surface d'appui (40) d'un deuxième dispositif (04) au moyen d'un dispositif de transfert (31) associé au premier dispositif (03),
- ledit dispositif de transfert (31) est réalisé comme une barre de poussée (32) horizontalement déplaçable par rapport à la surface d'appui (30) du premier dispositif,
- au moins à la fin de l'opération de transfert par poussée, la barre de poussée (32) du dispositif de transfert (31) du premier dispositif (03) et la surface d'appui (40) du deuxième dispositif (04) se recouvrent ou chevauchent l'une sur l'autre au moins en partie,
- à la fin de l'opération de transfert par poussée, on commence le mouvement relatif vertical (VR) entre les deux dispositifs (03, 04),
- la barre de poussée (32) du dispositif de transfert (31) du premier dispositif (03) est réalisée en forme de peigne ayant une partie dorsale (33) et des dents (34) qui font saillie à partir de celle-ci dans la direction horizontale vers le deuxième dispositif (04),
- la surface d'appui (40) du deuxième dispositif (04) est munie d'évidements (44) qui, au moins au niveau du chevauchement de la barre de poussée (32) du dispositif de transfert (31) du premier dispositif (03) et de la surface d'appui (40) du deuxième dispositif (04), correspondent avec les dents (34) de la barre de poussée (32), et,
- lors d'un mouvement relatif vertical (VR), les dents (34) de la barre de poussée (32) passent via les évidements (44) à travers la surface d'appui (40) du deuxième dispositif (04).
